# EUROPÄISCHE PATENTSCHRIFT

(11) **EP 1 485 896 B1**
(45) Veröffentlichungstag und Bekanntmachung des Hinweises auf die Patenterteilung: **16.02.2011**
(21) Anmeldenummer: 03718626.9
(22) Anmeldetag: 19.03.2003
(51) Int. Cl.: G08C 25/00

(54) **VERFAHREN ZUM ÜBERWACHEN EINER AUTOMATISIERUNGSANLAGE**
METHOD FOR MONITORING AN AUTOMATION SYSTEM
PROCEDE DE SURVEILLANCE D'UNE INSTALLATION D'AUTOMATISATION

(30) Priorität: 19.03.2002 DE 10212131
(43) Veröffentlichungstag der Anmeldung: 15.12.2004
(73) Patentinhaber: SIEMENS AKTIENGESELLSCHAFT, 80333 München (DE)
(72) Erfinder: BECKER, Peter, 76571 Gaggenau (DE)
(86) Internationale Anmeldenummer: PCT/DE2003/000908
(87) Internationale Veröffentlichungsnummer: WO 2003/079120

(56) Entgegenhaltungen:
- WO-A-03/027984
- DE-A- 3 240 046
- US-A- 5 469 150
- US-A- 5 691 714
- DEPPE M: "SIMATIC AND PROFIBUS-DP - THE IDEAL COMBINATION FOR DISTRIBUTED CONTROL" ENGINEERING AND AUTOMATION, SIEMENS AKTIENGESELLSCHAFT, BERLIN, DE, Bd. 18, Nr. 2, 1. März 1996 (1996-03-01), Seiten 15-17, XP000587885 ISSN: 0939-2068

## Beschreibung

Die Erfindung betrifft ein Verfahren zum Überwachen und Ermitteln vorhergehender Zustände Wenigstens eines Endgerätes einer Automatisierungsanlage.

In Automatisierungsanlagen mit mehreren Endgeräten (auch Automatisierungsgeräte genannt) und Steuergeräten (auch Bedien- und Beobachtungsstationen oder "Operator Station" genannt) werden Ereignisse auf Binärsignale abgebildet. Signaländerungen (pegelgetriggerte Änderungen) werden von den Endgeräten erfasst und mittels Meldetelegramm an ein oder mehrere Steuergeräte gemeldet, wo der gemeldete Signalpegel angezeigt und weiterverarbeitet wird.

Beim Stand der Technik kann eine zweite Meldung, beispielsweise mit dem Inhalt, dass sich das Signal zwischenzeitlich erneut geändert hat, erst dann wieder gesendet werden, wenn das Steuergerät dem Endgerät den Empfang der ersten Meldung bestätigt hat. Diese Bestätigung erfolgt mit einer Quittierungsnachricht.

Wird in einem Meldetelegramm ein einzelnes Signal gemeldet, so werden beim Stand der Technik die letzten beiden Signalwechsel erkannt. Die Rahmenbedingungen hierzu sind: a) im Meldetelegramm ist eine Zusatzinformation "Overflow" vorgesehen, die anzeigt, dass ein oder mehrere Signalwechsel nicht gemeldet werden konnten; b) eine Meldung wurde mit dem gleichen Signalzustand wie das zuletzt gemeldete und in dem Steuergerät gespeicherte Signal empfangen.

Um die Leistungsfähigkeit des Meldeprotokolls zu steigern und um Systemressourcen effektiver zu nutzen, werden Meldetelegramme eingesetzt, die mehr als ein Signal enthalten, nämlich beispielsweise acht Signale. Die Zusatzinformation in Form des "Overflow- Flags" im Meldetelegramm und die Tatsache, dass ein Meldetelegramm empfangen wurde, stellt bei mehreren Signalen eine 1:n-Beziehung dar. Eine Zuordnung der Zusatzinformation in dem "Overflow- Flag" sowie des Ereignisses "Empfang eines Meldetelegramms" zu einem einzelnen der mehreren Signale ist nicht mehr möglich. Damit ist sie für die allgemeingültige Signalverfolgung unbrauchbar. Die zur Verfügung stehende Information im Meldetelegramm reduziert sich vielmehr auf den jeweiligen Signalzustand, ein zwischenzeitlicher Wechsel vom ursprünglichen in einen zweiten Zustand und wieder zurück wird nicht erkannt.

In der nachveröffentlichten WO 03/027984 A2 wird ein Verfahren zum Überwachen einer Automatisierungsanlage vorgeschlagen.

Aufgabe der vorliegenden Erfindung ist es, ein Verfahren anzugeben, mit dem wenigstens einige der vorangegangenen Zustandswechsel auch nachträglich noch rekonstruiert werden können.

Diese Aufgabe wird durch ein Verfahren gemäß dem Patentanspruch gelöst.

Erfindungsgemäß wird das Meldetelegramm erweitert, um dem Steuergerät gegebenenfalls mitzuteilen, dass über die aus dem Meldetelegramm ablesbaren Übergänge hinaus ein weiterer Übergang stattgefunden hat. Dazu wird eine zusätzliche Information je Signal vorgesehen.
- Figur 1: zeigt die Abfolge von Zustandsänderung und der dazugehörigen Darstellung bei einem Zustandsüber- gang nach dem Stand der Technik.
- Figur 2: zeigt die Abfolge von Zustandsänderung und der da- zugehörigen Darstellung bei mehreren Zustandsüber- gängen nach dem Stand der Technik.
- Figur 3: zeigt die Abfolge von Zustandsänderung und der da- zugehörigen Darstellung bei mehreren Meldetelegram men und mehreren Zustandsübergängen nach dem Stand der Technik.
- Figur 4: zeigt die Abfolge von Zustandsänderungen und der dazugehörigen Darstellung bei mehreren Meldetele- grammen und mehreren Zustandsübergängen bei einer ersten Ausführungsform der Erfindung.
- Figur 5: zeigt die Abfolge von Zustandsänderungen und der dazugehörigen Darstellung bei mehreren Meldetele- grammen und mehreren Zustandsübergängen bei einer zweiten Ausführungsform der Erfindung.

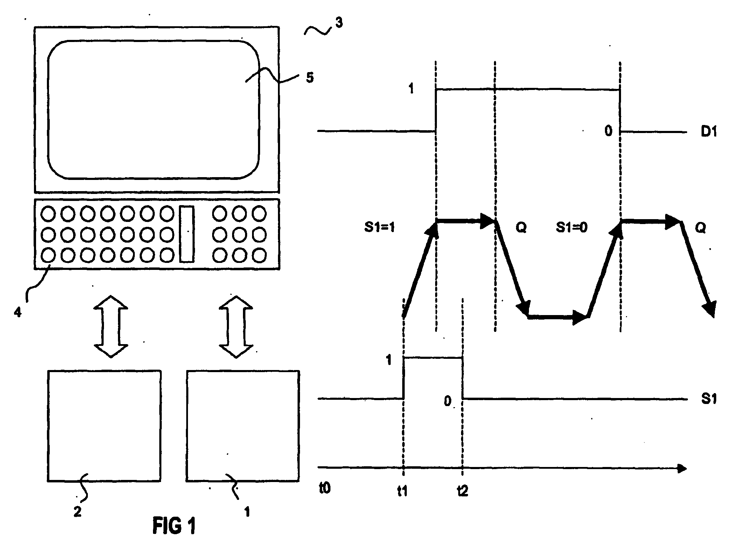

In Figur 1 ist eine Automatisierungsanlage mit zwei Endgeräten 1 und 2 sowie einem Steuergerät 3 gezeigt. Das Steuergerät umfasst eine Eingabetastatur 4 und einen Bildschirm zum Anzeigen von Signalen und Zustandsangaben der mit ihm verbundenen Endgeräte 1, 2 und je nach Umfang der Automatisierungsanlage weiterer, nicht dargestellter Endgeräte.

Jedes der Endgeräte 1 und 2, die in der Regel spezielle Aufgaben in der Automatisierungsanlage erfüllen, kann wenigstens zwei unterschiedliche Zustandswerte annehmen. Diese Zustandswerte werden als Zustandsangabe oder als Mitteilung eines Obergangs zwischen Zustandswerten dem Steuergerät 3 mitgeteilt, wobei die Kommunikation zwischen Endgerät 1 bzw. 2 und Steuergerät 3 in den Figuren als Doppelpfeil angedeutet ist. Das Steuergerät 3 liest die unterschiedlichen, asynchronen Meldungen der einzelnen Endgeräte ein, so dass das Personal zur Überwachung der Anlage einen Überblick über den Gesamtzustand der Anlage hat und gegebenenfalls über das Steuergerät 3 regulierend eingreifen kann. (Hier und im Folgenden wird unter "einlesen" das Erkennen, Erfassen und Bearbeiten von Meldungen der Endgeräte im Steuergerät verstanden, ohne dass diese Meldungen erst beim jeweiligen Endgerät abgerufen werden müssen, was jedoch ebenfalls möglich ist.)

Dabei soll das Steuergerät immer den aktuellen Zustand des Endgeräts - zeitverzögert - anzeigen und außerdem zumindest den letzten Übergangszyklus des Endgeräts ("0" -> "1"; "1" -> "0" oder "1" -> -0"; "0" -> "1") erkennen. In bestimmten Anwendungsfällen fällt dem zweiten Aspekt eine besondere Bedeutung zu: Bei Zustandsmeldungen (so genannter "Events") ist es wichtig festzustellen, ob ein Ereignis stattgefunden hat oder nicht, z. B. ob eine Klappe in der Anlage geöffnet und wieder geschlossen wurde. Wie oft dies geschieht, ist von untergeordneter Bedeutung und wird, falls notwendig, im Endgerät ermittelt und steht dann als Zusatzinformation zu Verfügung.

In dem rechten Teil der Figur 1 ist die Abfolge mehrerer Zustandsänderungen des Endgerätes 1, der Inhalt von zwischen dem Endgerät 1 und dem Steuergerät 3 ausgetauschten Meldungen und die dazugehörige Darstellung in dem Steuergerät 3 nach dem Stand der Technik gezeigt.

Zu einem Zeitpunkt t0 befindet sich das Endgerät in einem logischen Zustand, der mit "0" bezeichnet ist. Dieser Zustandswert kann beispielsweise bei der Inbetriebnahme der Automatisierungsanlage vorliegen, oder er kann zu einem späteren Zeitpunkt erreicht worden sein. Im ersten Fall ist dem Steuergerät 3 der Zustandswert des Endgerätes 1 nicht unmittelbar bekannt, und der ursprüngliche Zustandswert wird erst durch Mitteilung einer Zustandsänderung des Endgerätes 1 an das Steuergerät 3 erkannt.

Zu einem Zeitpunkt t1 erfolgt ein Übergang des Endgerätes 1 von einem logischen Zustandswert "0" auf einen logischen Zustandswert "1". Dieser Übergang löst die Ausgabe eines Meldetelegramms durch das Endgerät 1 aus. Das Meldetelegramm umfasst eine Zustandskomponente S1, die ein identisches Abbild des Zustandswertes des Endgerätes 1 ist. (Dabei wird hier der Einfachheit halber ein System angenommen, bei dem ein Signal nur zwei Zustandswerte annehmen kann, darauf ist die Erfindung jedoch nicht beschränkt, und die Zustandskomponente S1 kann allgemein mehrere Zustandswerte annehmen.) Das Meldetelegramm wird von dem Steuergerät 3 eingelesen. Das Einlesen erfolgt über eine bestimmte Zeitdauer, es ist durch einen schrägen Pfeil von einem unteren auf einen oberen Pegel in der Figur 1 angedeutet. Neben dem Pfeil ist der Inhalt des Meldetelegramms angegeben, das in diesem Fall nur aus der Zustandskomponente S1 besteht, deren Inhalt "1" ist, d. h. der neue Zustandswert ist, den das Endgerät 3 jetzt eingenommen hat. Beendet ist das Einlesen zu einem Zeitpunkt nach t1.

Wenn das Einlesen des Meldetelegramms durch das Steuergerät 3 beendet ist, wird in dem Steuergerät 3 ein Signal D1, das einer Darstellung des Zustandswertes S1 des Endgerätes 1 entspricht, von einem logischen Zustandswert "0" auf einen logischen Zustandswert "1" gesetzt. (Hier wird der Einfachheit halber vorausgesetzt, dass ein Zustandswertübergang des Endgerätes in einer Richtung einem Übergang des Signals D1 in derselben Richtung entspricht. Dies ist jedoch keine Voraussetzung für die Umsetzung der Erfindung, und dem Fachmann ist klar, dass die Beziehung zwischen Zustand S1 und Darstellungssignal D1 auch komplementär gewählt werden kann.)

Nach der vollständigen Übertragung des Meldetelegramms von dem Endgerät 1 an das Steuergerät 3 folgen weitere Verarbeitungsschritte in dem Steuergerät 3. Die Dauer der Verarbeitungsschritte ist durch den waagerechten Pfeil auf dem oberen Pegel angedeutet. Erst nach Abschluss der Verarbeitungsschritte setzt das Steuergerät 3 ein Quittierungssignal an das Absenderendgerät 1 ab, mit dem es dem Endgerät 1 mitteilt, dass das Meldetelegramm des Endgerätes 1 von dem Steuergerät 3 erfolgreich eingelesen worden ist. Auch die Übertragung des Quittierungssignals hat eine bestimmte Zeitdauer, die durch einen schrägen Pfeil Q vom oberen Pegel auf den unteren Pegel dargestellt ist. Der nachfolgende Ruhezustand der Kommunikation zwischen Endgerät 1 und Steuergerät 3 ist durch einen waagerechten Pfeil auf dem unteren Pegel angedeutet. In dieser Zeit verarbeitet das Endgerät 1 die Mitteilung des Steuergerätes 3. Erst danach kann das Endgerät 1 eine Mitteilung an das Steuergerät 3 absetzen, dass ein weiterer Übergang stattgefunden hat. Ein solcher Übergang hat in dem dargestellten Beispiel zum Zeitpunkt t2 stattgefunden, kurz nach Absetzen der ersten Mitteilung von dem Endgerät 1 an das Steuergerät 3. Während des Übergangs zum Zeitpunkt t2 fand die Kommunikation zwischen dem Endgerät 1 und dem Steuergerät 3 und die Verarbeitung in dem Endgerät 1 bzw. in dem Steuergerät 3 statt. Der zweite Zustandswertübergang von der logischen "1" auf die logische "0" wurde daher von dem Endgerät 1 zwischengespeichert und wird erste jetzt an das Steuergerät 3 abgesetzt. Das Darstellungssignal D1 wird auf "0" gesetzt, und in diesem Fall entgeht dem Steuergerät 3 kein Übergang.

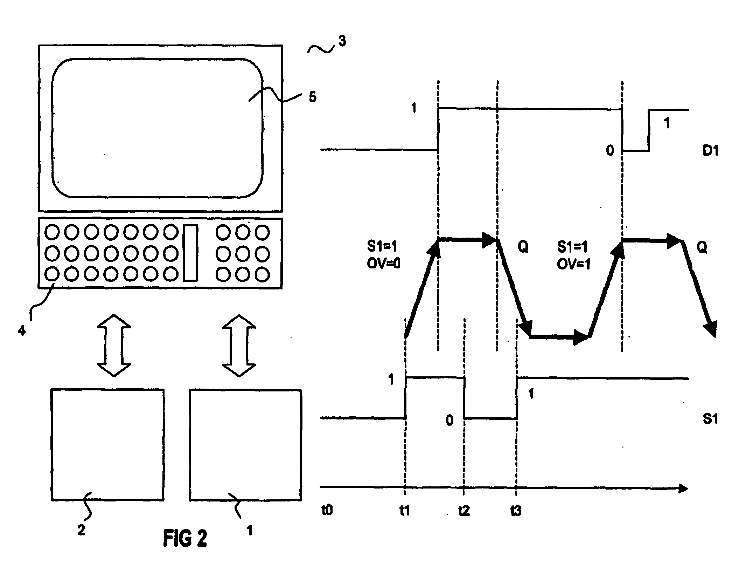

In Figur 2 ist ein erweitertes Meldetelegramm gezeigt, das die Kommunikation zwischen dem Endgerät 1 und dem Steuergerät 3 bei höherer Rate von Zustandswertänderungen des Endgerätes 1 ermöglicht. Wenn sich Signale sehr schnell ändern, kann es zu einer sehr hohen Meldelast kommen. Dadurch wird die Automatisierungsanlage belastet und die Kommunikationsfähigkeit der Anlage erheblich eingeschränkt. Um dies zu verhindern, wird ein im Stand der Technik als "Quittierungsgetriggertes Melden" (QTM) bezeichnetes Verfahren eingeführt, mit dem Meldungen interaktiv beeinflusst werden. Eine Meldung wird vom Endgerät nur dann gemeldet, wenn dieses Signal von dem Steuerungsgerät mittels Telegramm freigeschaltet wurde. Ist ein Signal im Endgerät freigeschaltet, meldet das Endgerät einen Signalwechsel und löscht die Freischaltung im Endgerät. Weitere Signalwechsel können wegen der gelöschten Freischaltung nicht mehr gemeldet werden. Geht ein Signalwechsel verloren, kann dieses Signal nicht mehr freigeschaltet werden. Um diese Selbstblockade ("Deadlock") auszuschalten, ist es zwingend notwendig, dass wenigstens die beiden letzten Signalwechsel erkannt werden.

Dazu wird bei dem Verfahren nach Figur 2 eine weitere Komponente in das Meldetelegramm mit aufgenommen, die mit OV ("Overflow") bezeichnet ist. Zusätzlich zu den in Figur 1 gezeigten Übergängen des Endgeräts 1 von "0" auf "1" bei t1 und von "1" auf "0" bei t2 findet ein weiterer Übergang von "0" auf "1" bei t3 statt. Der Übergang von "1" auf "0" bei t2 kann aus den oben genannten Gründen nicht sofort von dem Endgerät 1 an das Steuergerät 3 gemeldet werden und ginge damit verloren, da zu dem Zeitpunkt, zu dem das Endgerät 1 eine weitere Meldung an das Steuergerät 3 absetzen kann, sein Zustandswert - wieder - "1" ist. Der Zustandswert "1" des Endgeräts 1 entspricht damit dem zuletzt gemeldeten, und das Steuergerät 3 würde einen - bereits abgeschlossenen - Zustandswertübergang des Endgeräts 1 nicht erkennen. Um aber auch den bereits abgeschlossenen Übergang zu dokumentieren, wird beim nächsten Meldetelegramm die Komponente OV auf "1" gesetzt, was dem Steuergerät 3 anzeigt, dass außer den mitgeteilten Übergängen auch noch ein "verborgener" Übergang stattgefunden hat. Bei Empfang des zweiten Meldetelegramms, das den Übergang von "1" auf "0" des Endgeräts 1 mitteilt, wird daher das Darstellungssignal von "1" auf "0" gesetzt. Da aber außerdem die Komponente OV des Meldetelegramms auf "1" gesetzt ist, wird das Darstellungssignal D1 sofort wieder auf "1" gesetzt, um dem "verborgenen" Übergang Rechnung zu tragen. Das resultierende Darstellungssignal D1 ist in Figur 2 oben rechts gezeigt.

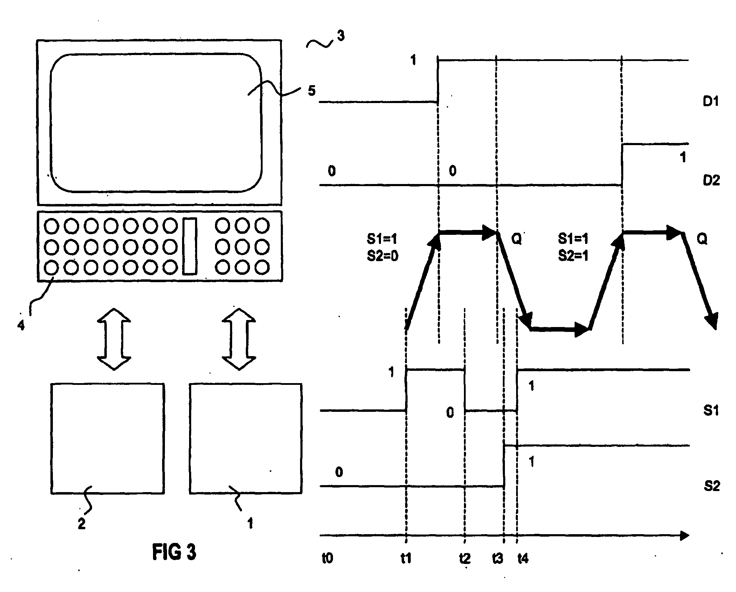

Diese Information reicht, wie in Figur 3 gezeigt ist, nicht aus, wenn das Endgerät 1 mehrere unabhängige Zustände annehmen kann und daher dem Steuergerät 3 mehr als eine Zustandskomponente gemeldet werden müssen. In Figur 3 ist ein Beispiel mit einer Zustandskomponente S1 und einer Zustandskomponente S2 des Meldetelegramms gezeigt.

Bei dem Beispiel in Figur 3 erfolgt die gleiche Folge von Zustandswertübergängen der Zustandskomponente S1 wie in Figur 2, d. h. ein erster Zustandswertübergang von "0" nach "1" bei t1, ein zweiter Zustandswertübergang von "1" nach "0" bei t2 und ein dritter Zustandswertübergang von "0" nach "1" bei t4. Außerdem erfolgt ein Zustandswertübergang einer zweiten Zustandskomponente S2 von "0" nach "1" bei t3 zwischen t2 und t4. Das erste Meldetelegramm, das bei t1 von dem Endgerät 1 an das Steuergerät 3 abgesetzt wird, enthält daher als Werte für die Komponenten S1 und S2 "1" bzw. "0". Das zweite Meldetelegramm, das nach t4 von dem Endgerät 1 an das Steuergerät 3 abgesetzt wird, enthält als Werte für die Komponenten S1 und S2 "1" bzw. "1", da zu diesem Zeitpunkt sowohl S1 als auch S2 den Wert "1" angenommen haben. Der "verborgene" Übergang von S1 bei t2 und t4 geht dem System damit verloren. Dies würde sich auch mit einer zusätzlichen Komponente OV des Meldetelegramms nicht ändern, da das System diese Komponente OV nicht mehr eindeutig einem der Zustandswerte S1 und S2 zuordnen könnte.

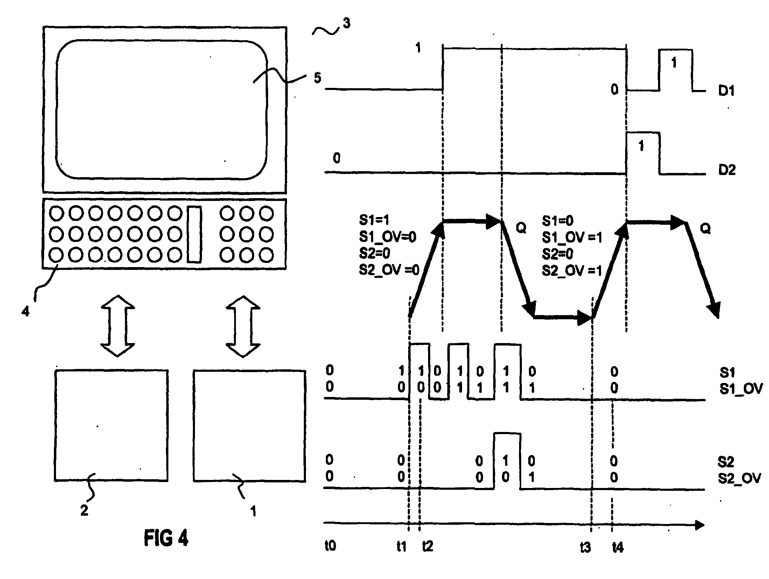

In Figur 4 ist ein erstes Beispiel des erfindungsgemäßen Verfahrens gezeigt.

Für jedes Signal einer Meldung wird eine weitere Informationseinheit S1_OV bzw. S2_OV eingeführt. Diese Informationseinheit wechselt von 0 nach 1, wenn sich das zugehörige Signal mehr als einmal seinen Zustand ändert, bevor der Signalzustand an das Steuergerät 3 gemeldet werden kann. Aufgrund des gemeldeten, aktuellen Signalzustandes und der Zusatzinformation Sn_Ov kann das Steuergerät 3 immer jedes Signal der Meldung mindestens zwei Signalwechsel im Endgerät 1 oder 2 in die Vergangenheit zurückverfolgen.

In Figur 4 ist eine Ausführungsform zum sicheren Erkennen von Zustandswertübergängen bei mehreren möglichen Zuständen des Endgeräts bei QTM-Verfahren durch Erweiterung des Meldetelegramms gezeigt. Es ist prinzipiell eine weitere Informationseinheit für jedes gemeldete Signal notwendig, die im folgenden als Binärinformation behandelt wird, obgleich auch mehrwertige Informationseinheiten und insbesondere analoge Signale verwendet werden können.

In Figur 4 werden jedem Signal die Zusatzkomponenten S1_OV bzw. S2_OV zugeordnet. Erfolgt ein Zustandswertübergang, wird dies in der entsprechenden Zusatzkomponente S1_OV oder S2_OV festgehalten. (Die Komponenten S1, S1_OV, S2, S2_OV ... sind rechts unten in Figur 4 aufgelistet.) Beim Versenden der Meldung nach dem Zeitpunkt t1 werden diese Ereignisinformationen gelöscht. Die darauf folgenden Ereignisse bei t2 und danach werden gesammelt und mit Eintreffen des Quittierungssignals Q an das Steuergerät gemeldet. Das Steuergerät kann anhand des empfangenen Signalzustandes S1 und der Zusatzkomponente S1_OV den Signalverlauf der letzten beiden Signalwechsel nachbilden.

In Figur 4 befinden sich daher zum Zeitpunkt t0 die Komponenten S1 und S1_OV des ersten Zustands auf "0", ebenso wie die Komponenten S2 und S2_OV des zweiten Zustands des Endgeräts 1. Zum Zeitpunkt t1 ändert sich der Zustandswert von S1 von "0" auf "1", so dass S1 den Wert "1" annimmt, alle anderen Variablen aber den Wert "0" beibehalten.

Das Meldetelegramm wird zum Zeitpunkt t2 abgeschickt, und in der gezeigten Ausführungsform wird die Zusatzkomponente S1_OV gleichzeitig auf "0" zurückgesetzt, da eine Meldung von dem Endgerät 1 an das Steuergerät 3 erfolgt ist und die Information nicht mehr im Endgerät zwischengespeichert werden muss. Nach t2 erfolgt in dem gezeigten Ablauf ein Übergang von S1 von "1" auf "0". Die Werte von S1 und S1_OV sind folglich "0" und "0". Da dieser Übergang nicht sofort durch das Endgerät 1 an das Steuergerät 3 gemeldet werden kann, werden diese Werte zwischengespeichert. Bei dem nächsten Übergang von S1 von "0" auf "1" wird S1 auf "1" gesetzt, und außerdem wird S1_OV auf "1" gesetzt, da der letzte Übergang noch nicht gemeldet wurde bzw. keine Quittierung beim Endgerät 1 eingegangen ist.

Der Zustand S1_OV = 1 bleibt solange bestehen, bis von dem Endgerät 1 eine Meldung an das Steuergerät 3 abgesetzt wurde.

Ein nächster Übergang setzt S1 wieder auf "0", und ein darauf folgender, weiterer übergang setzt S1 auf "1" usw. Schließlich wird S1 in der dargestellten Situation noch vor dem Absenden einer weiteren Meldung wieder auf "0" gesetzt. Während der letzten vier Übergänge blieb S1_OV auf "1". Erst mit dem Absenden der nächsten Meldung zum Zeitpunkt t4 wird S1_OV wieder auf "0" gesetzt.

Die Werte in dem Meldetelegramm zeigen dem Steuergerät 3 sowohl an, dass der aktuelle Zustandswert S1 "0" ist, als auch dass seit dem letzten Meldetelegramm mindestens zwei Übergänge stattgefunden haben. Damit kann das Darstellungssignal D1 zu dem ersten Zustand des Endgerätes 1 wie in Figur 4 oben rechts dargestellt den Verlauf der Übergänge (qualitativ) rekonstruieren, nämlich durch die Übergänge "0" auf "1", "1" auf "0" und "0" auf "1". Dies entspricht zwei der drei Übergänge von S1.

Mit dem Senden einer Meldung wird die Zusatzkomponente S1_OV zurückgesetzt, wie dies bei t2 und t4 in Figur 4 gezeigt ist. In der Zwischenzeit hat außerdem ein Übergang von S2 von "0" auf "1" stattgefunden. Damit wird S2 auf "1" gesetzt, und S2_OV bleibt auf "0". Bei einem weiteren Übergang wechselt S2 von "1" zurück auf "0". Da der letzte Übergang noch nicht gemeldet werden konnte, wird S2_OV jetzt auf "1" gesetzt. Dieser zweite Wert S2_OV bleibt bestehen, bis S2 und S2_OV dem Steuergerät 3 in einem Meldetelegramm mitgeteilt worden sind.

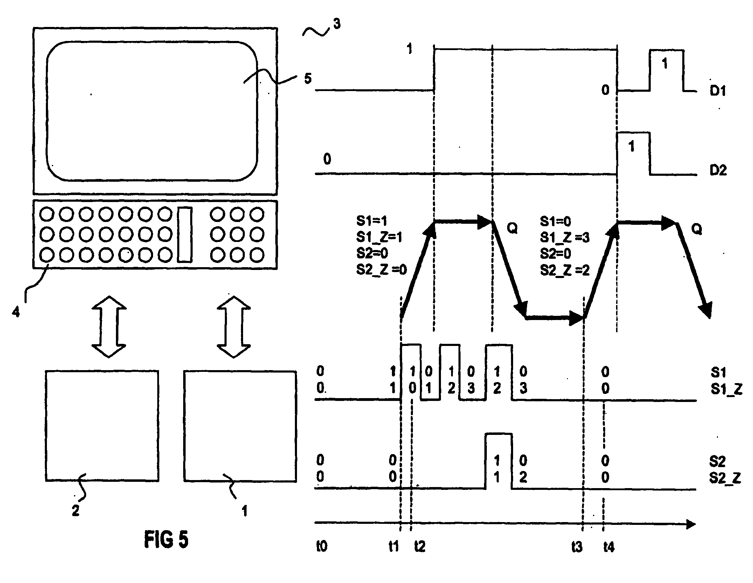

In Figur 5 wird ein Ablauf dargestellt, bei dem das Meldetelegramm (Betriebszustandsmeldungen bzw. QTM-Verfahren) durch eine Zählerkomponente erweitert wird, die zur Unterscheidung von der Darstellung in Figur 4 in Figur 5 mit S1_Z bzw. S2_Z bezeichnet wird.

Unter der Rahmenbedingung, dass das Steuergerät 3 den Meldezustand gespeichert hat, wird für jedes Signal einer Meldung ein Zähler mit den Zählerkomponenten S1_Z und S2_Z eingeführt. Dieser Zähler zählt die Signalwechsel von S1 und S2, die seit dem Senden der letzten Meldung aufgetreten sind. Hierzu ist für ein Binärsignal mindestens eine 2-Bit-Information notwendig.

Aufgrund der gemeldeten Signalwechsel oder des gespeicherten Meldezustands kann das Steuergerät 3 die im Endgerät 1, 2 erfolgten Signalwechsel zurückverfolgen.

Das Meldetelegramm enthält wenigstens eine Zählerkomponente S1_Z bzw. S2_Z zu jeder Zustandskomponente S1 bzw. S2, deren Zustand bei einem Übergang der Zustandskomponente S1, S2 geändert wird. Die Zählerkomponente S1_Z bzw. S2_Z bildet einen mindestens vierwertigen Zähler. Dies lässt sich dadurch verwirklichen, dass die Zählerkomponente S1_Z bzw. S2_Z selbst vierwertig ist oder durch zwei Bits dargestellt wird, die die Werte "00", "01", "10" und "11" annehmen können. Erfolgt ein Zustandswertübergang, wird dies in dem entsprechenden Zählerbit S1_Z oder S2_Z festgehalten. (Die Komponenten S1, S1_Z, S2, S2_Z ... sind rechts unten in der Figur aufgelistet.) Bei t1 erfolgt ein Übergang in S1 von "0" auf "1". Gleichzeitig wird die Zählerkomponenten S1_Z auf "1" gesetzt, da dies der erste Übergang von S1 ist. Die Meldung wird von dem Endgerät 1 zum Zeitpunkt t2 an das Steuergerät 3 gesendet, woraufhin die Zählerkomponente S1_Z wieder auf "0" zurückgesetzt wird, da der letzte Übergang von S1 dem Steuergerät 3 nun bekannt ist.

Beim nächsten Übergang wird S1 von "1" auf "0" gesetzt. Entsprechend wird S1_Z wieder auf "1" gesetzt, da dieser Übergang dem Steuergerät 3 noch nicht bekannt sein kann. Beim Übergang von S1 wieder von "0" auf "1" wird S1_Z weiter auf "2" hochgezählt, so dass sich als Zustandskomponenten 1 und 2 ergeben. Bei dem nächsten Übergang von S1 der von "1" auf "0" erfolgt, ergeben sich folglich als Zustandskomponenten 0 und 3. Weitere Übergänge führen dazu, dass der Zähler nicht auf "0" mit Oberlauf-Bit gesetzt wird, sondern um "1" abwärts zählt. Mit anderen Worten, wenn ein Zählerüberlauf stattfindet, wird abwechselnd abwärts und aufwärts gezählt; dies ist bei einer 2-Bit-Information nach dem dritten Signalwechsel der Fall. In diesem Fall hat der Zähler den Wert Null; die drei erfolgten Signalwechsel sind dann für den Empfänger der Meldung nicht mehr erkennbar. Daher wird der Zähler um Eins dekrementiert, wenn der durch Inkrementieren den Wert Null annehmen würde. Beim nächsten Übergang wird der Zähler wieder inkrementiert. Dies bedeutet, dass der Zähler mit Erreichen des maximal darstellbaren Zustandes zwischen dem höchsten und zweithöchsten Wert, d. h. bei 2-Bit-Zählern zwischen den Werten 2 und 3 "toggelt". Ein nach dem vierten folgender Obergang erhöht also den Zähler, so dass sich für die Komponente S1_Z in Figur 5 ergibt: 0, 1, 2, 3, 2, 3, 2, 3, ... Die Zählerkomponente S1_Z wird erst wieder auf "0" gesetzt, wenn ein Meldetelegramm bei t4 an das Steuergerät 3 abgesetzt wurde.

Das Steuergerät kann anhand des empfangenen Signalzustandes S1 und der Zählerinformation S1_Z den Signalverlauf der letzten Signalwechsel nachbilden. Damit kann das Darstellungssignal D1 zu dem ersten Zustand des Endgerätes 1 wie in Figur 5 oben rechts dargestellt den Verlauf von drei der vier Übergänge (qualitativ) rekonstruieren, nämlich durch die Übergänge "0" auf "1", "1" auf "0" und "0" auf "1". Dies entspricht den Übergängen von S1. Mit dem Senden eines Meldetelegramms werden diese Zähler zurückgesetzt, s. t2/t4 in Figur 5.

In der Zwischenzeit hat außerdem ein Übergang von S2 von "0" auf "1" stattgefunden. Damit wird S2 auf "1" gesetzt, und S2_Z wird auf "1" gesetzt. Bei einem weiteren Übergang wechselt S2 von "1" zurück auf "0". S2_Z wird jetzt von "1" auf "2" gesetzt. Das Inkrementieren des zweiten Wertes S2_Z wird fortgeführt (ab Erreichen des Maximalwertes abwechselnd mit Dekrementieren), bis S2 und S2_Z dem Steuergerät 3 in einem Meldetelegramm mitgeteilt worden sind.

Die Erfindung ist nicht auf die obigen Beispiele beschränkt. So wurde davon ausgegangen, dass alle Komponenten S1 S2, SL-OV, S2_OV, S1_Z, S2_Z des Meldetelegramms binär dargestellt sind. Dies ist jedoch nicht unbedingt notwendig, sondern es können auch einige oder alle Komponenten als Analogwerte vorliegen.

## Patentansprüche

1. Verfahren zum Überwachen und Ermitteln vorhergehender Zustände wenigstens eines Endgerätes einer Automatisierungsanlage, die umfasst:
- wenigstens ein Endgerät (1, 2), dessen Zustand wenigstens zwei Zustandswerte aufweisen kann und das ein Meldetelegramm ausgibt, das von den wenigstens zwei Zustandswerten abhängt,
und
- ein Steuergerät (3), das das Meldetelegramm von dem wenigstens einen Endgerät (1, 2) einliest, wobei das wenigstens eine Endgerät (1, 2) ein weiteres von dem Steuergerät (3) einzulesendes Meldetelegramm erst ausgibt, nachdem es ein Quittierungssignal (Q) von dem Steuergerät (3) empfangen hat, und wobei das Quittierungssignal (Q) dem wenigstens einen Endgerät (1, 2) mitteilt, dass das Meldetelegramm von dem Steuergerät eingelesen worden ist,
wobei jedes Meldetelegramm zu jedem Zustandswert einen Wert einer Zählerkomponente (S1_Z, S2_Z; SL-OV, S2_OV) enthält, wobei dieser Wert bei einem Zustandswertübergang geändert und nach Erreichen eines Maximalwertes abwechselnd um Eins abwärts und aufwärts gezählt wird, wobei ferner beim Ausgeben eines Meldetelegramms dieser Wert auf einen Anfangswert zurückgesetzt wird.

## Claims

1. Method for monitoring and determining preceding states of at least one terminal of an automation system, which comprises:
- at least one terminal (1, 2), whose state can assume at least two state values and which outputs a monitoring meassage that depeds on the at least two states values,
and
- a control unit (3) that reads in the monitoring message from the at least one terminal (1, 2), the at least one terminal (1, 2) outputting another monitoring message to be read in by the control unit (3) only after it has received an acknowledgement signal (Q) from the control unit (3), and the acknowledgement signal (Q) notifying the at least one terminal (1, 2) that the monitoring message is being read in by the control unit,
wherein each monitoring message contains, for each state value, a value of a counter component (S1_Z, S2_Z; S1_OV, S2_OV), this value being changed during a transition of the state value and being counted downwards and upwards by one alternately after a maximum value is reached, this value furthermore being reset to an initial value when a monitoring message is output.

## Revendications

1. Procédé de contröle et de détermination d'états antérieurs d'au moins un terminal d'une installation d'automatisation, qui comprend:
- au moins un terminal (1, 2), dont l'état peut présenter au moins deux valeurs d'état et qui émet un télégramme d'avertissement qui dépend des au moins deux valeurs d'état, et
- un appareil (3) de commande, qui peut lire le télégramme d'avertissement du au moins un terminal (1, 2), au moins un terminal (1, 2) émettant un télégramme d'avertissement à lire par l'appareil (3) de commande, seulement après qu'il a reçu de l'appareil (3) de commande un signal (Q) d'accusé de réception et dans lequel le signal (Q) d'accusé de réception fait part au au moins un terminal (1, 2), que le télégramme d'avertissement a été lu par l'appareil de commande, dans lequel chaque télégramme d'avertissement contient, pour chaque valeur d'état, une valeur d'un composant (S1_Z, S2_Z ; S1_OV, S2_OV) de compteur, cette valeur étant modifiée pour une transition de valeur d'état et décrémentée et incrémentée de un en alternance après l'obtention d'une valeur maximum, cette valeur étant en outre remise à une valeur initiale, lors de l'émission d'un télégramme d'avertissement.
